# EUROPEAN PATENT APPLICATION

(11) **EP 4 752 004 A1**
(43) Date of publication of application: **03.06.2026**
(21) Application number: 24869830.0
(22) Date of filing: 04.06.2024
(51) Int. Cl.: B60R 11/02, B60R 1/22, B60R 16/023

(54) **VEHICLE-MOUNTED ASSISTED DRIVING INSTRUMENT**

(30) Priority: 28.09.2023 CN 202311267277
(71) Applicant: Raytron Technology Co., Ltd., Yantai, Shandong 264006 (CN)
(72) Inventor: NI, Chenfeng, Hefei, Anhui 230001 (CN); CHENG, Lianghui, Hefei, Anhui 230001 (CN); CHEN, Jie, Hefei, Anhui 230001 (CN); LI, Xueqing, Hefei, Anhui 230001 (CN); LIN, Jiamin, Hefei, Anhui 230001 (CN); SHI, Benyi, Hefei, Anhui 230001 (CN); HUANG, Xingming, Hefei, Anhui 230001 (CN)
(74) Representative: Reiser & Partner Patentanwälte mbB
(86) International application number: PCT/CN2024/097384
(87) International publication number: WO 2025/066268

(57) **Abstract**

A vehicle-mounted driver-assistance instrument includes a host body (1) and a bracket member (2). The host body (1) includes a controller connected to an on-board camera, and a display screen, and the display screen is arranged on one side of the host body (1). The controller controls the display screen **(11)** to display in-vehicle images generated from image data acquired by the on-board camera. The bracket member (2) is rotatably connected to the host body (1), and rotates with respect to the host body (1) to a stand state or a stowed state. When the bracket member (2) rotates with respect to the host body (1) to the stand state, the bracket member (2) and the host body (1) form a mounting position for mounting an intelligent terminal device. When the bracket member (2) rotates with respect to the host body (1) to the stowed state, the bracket member (2) is stowed on the host body (1). The vehicle-mounted driver-assistance instrument integrates the host body with the bracket member, providing a storage function for the bracket member.

## Description

The present invention claims priority to Chinese Patent Application No. 2023112672776, entitled "VEHICLE-MOUNTED DRIVER-ASSISTANCE INSTRUMENT", filed to the China National Intellectual Property Administration on September 28, 2023, which is incorporated herein by reference in its entirety.

### FIELD

The present invention relates to the technical field of driver assistance, in particular to a vehicle-mounted driver-assistance instrument.

### BACKGROUND

With the increasing popularization of the intelligent driver-assistance technology, more and more driver-assistance equipment has appeared on the market. Existing driver-assistance equipment is typically integrated in the compartment of a vehicle, and an on-board video of the vehicle driving scenario acquired in real time is displayed by a display screen in the compartment. However, the size of the display screen in the compartment is generally fixed and mainly used to display a visible-light on-board video. In harsh environments with insufficient light, rain, snow and dense fog, the vision of drivers is obstructed, and the display of visible-light images cannot effectively assist drivers in recognition and judgment. With the development of the infrared imaging technology, how to simultaneously utilize infrared images and visible-light images to on-board driver-assistance to enhance safety performance is garnering increasing attention. The architecture of the existing driver-assistance equipment cannot satisfy the expanded application requirement for improving the driver-assistance performance by the infrared imaging technology.

In addition, with the development of the mobile electronic product technology, mobile electronic devices such as mobile phones and tablet computers have brought a lot of convenience to users and are often used as driver-assistance instruments for driver-assistance. However, when the mobile electronic devices are used together with in-vehicle products, a holder needs to be additionally mounted in a vehicle to clamp the mobile electronic products, and the holder occupies space in the vehicle, thereby affecting the user experience with the mobile electronic devices.

### SUMMARY

Accordingly, the objective of the present invention is to provide a vehicle-mounted driver-assistance instrument, which has a compact structure and implements double-screen display of in-vehicle images by interactive communication with an intelligent terminal, such that both infrared images and visible-light images can be applied to in-vehicle driver-assistance to improve driving safety.

To fulfil the above objective, the technical solution of the invention is as follows:
A vehicle-mounted driver-assistance instrument, comprises a host body and a bracket member; the host body comprises a controller connected to an on-board camera, and a display screen, the display screen is arranged on a side of the host body, and the controller controls the display screen to display an in-vehicle image generated from image data acquired by the on-board camera;
the bracket member is rotatably connected to the host body and rotates with respect to the host body between a stand state or a stowed state;
when the bracket member rotates with respect to the host body to the stand state, the bracket member and the host body jointly form a mounting position for placing an intelligent terminal device; when the bracket member rotates with respect to the host body to the stowed state, the bracket member is folded and stowed on the host body.

Further, an upper surface of the host body defines an accommodating space, and the bracket member is rotatably connected to a side of the accommodating space;
when the bracket member rotates with respect to the host body to the stowed state, the bracket member is folded and stowed in the accommodating space; when the bracket member rotates with respect to the host body to the stand state, a free end of the bracket member is away from the accommodating space, and the mounting position for mounting the intelligent terminal device is formed between the bracket member and the accommodating space.

Further, a magnetic member is arranged on the bracket member, and the magnetic member provides a magnetic force for attracting the intelligent terminal device onto the bracket member.

Further, the host body comprises a lower housing and an upper housing which are arranged opposite to each other, and the lower housing and the upper housing are assembled together to form an internal space of the host body;
one side of a top surface of the upper housing close to the display screen is bent upwards to form a stop surface, the other side of the top surface of the upper housing is bent downwards to form a mounting surface provided with a plurality of interfaces, and the stop surface is configured to limit and stop the intelligent terminal device placed in the mounting position.

Further, the vehicle-mounted driver-assistance instrument further comprises a rotating member, wherein the bracket member is rotatably connected to the host body by the rotating member;
the rotating member comprises a rotating arm fixed to the bracket member, a central shaft fixed to the rotating arm and a stationary base used for arranging the central shaft;
the stationary base is arranged on an upper surface of the host body, and the central shaft is movably connected to the stationary base and is rotatable with respect to the stationary base.

Further, a first PCB and a second PCB are arranged in the host body, and the first PCB is provided with a first interface connected to the external on-board camera and a second interface in communication with the intelligent terminal device;
the second PCB is provided with a data storage card slot and a third interface connected to a GPS sensor.

Further, a first support plate and a second support plate are spaced apart in the host body;
the first PCB is arranged on the first support plate, and the second PCB is arranged on the second support plate;
a stationary side plate is arranged between the first support plate and the second support plate, and the stationary side plate is fastened to the first support plate and the second support plate.

Further, the host body is in communication with the intelligent terminal device for data transmission with the intelligent terminal device, so that the in-vehicle image is displayed by the intelligent terminal device.

Further, the controller is in communication with an on-board dual-light camera having a dual-light core module, the controller generates in-vehicle images of different types based on visible-light image data and infrared image data acquired by the on-board dual-light camera, and the types of the in-vehicle images at least comprise a type of infrared in-vehicle images and a type of visible-light in-vehicle images;

the display screen of the host body displays the in-vehicle image of a first target type, the intelligent terminal device displays the in-vehicle image of a second target type, and the first target type and the second target different are identical or different.

Further, an ambient-light sensor is provided in the host body, the ambient-light sensor detects light intensity signals and transmits the light intensity signals to the controller; and according to the light intensity signals, the controller controls the host body to switch the first target type of the in-vehicle image displayed on the display screen, and/or controls to switch the second target type of the in-vehicle image displayed on the intelligent terminal device.

Compared with the prior art, the vehicle-mounted driver-assistance instrument according to the above embodiments has at least the following technical effects:
The bracket member is rotatably connected to the host body of the vehicle-mounted driver-assistance instrument and is able to rotate with respect to the host body to the stand state or the stowed state, such that the host body can provide a support function by the bracket member to ensure that an intelligent terminal device is stably placed. In this way, the host body not only provides a support function for stably placing an intelligent terminal device, but also provides a storage function of the bracket member. The structure is more compact, and it enables the intelligent terminal device to be installed in a more user-friendly viewing position when placed on bracket member, thereby enhancing the dual-screen viewing experience of in-vehicle images during driving.

In addition, the intelligent terminal device can be used as an additional display device of the host body and can establish a communication with the host body for data transmission, such that the host body can display the in-vehicle image generated from image data acquired by the on-board camera on its local display screen, while simultaneously sending it in real time to the intelligent terminal device for display. In this way, benefiting from the development and popularization of various portable intelligent terminal devices, the display of the in-vehicle image no longer merely relies on the display function of the host body of the vehicle-mounted driver-assistance instrument, double-screen display is provided based on data interaction between the host body and the intelligent terminal device, and the vehicle-mounted driver-assistance instrument can display in real time a video data source adaptive to a scenario, for example, both infrared images and visible-light images can be applied to in-vehicle driver-assistance by double-screen display of the host body and the intelligent terminal device to facilitate observation of drivers to ensure that the drivers watch clear in-vehicle images, thus improving driving safety and greatly improving the convenience and practicability of the host body.

### BRIEF DESCRIPTION OF THE DRAWINGS

FIG. 1 is a schematic structural diagram of a vehicle-mounted driver-assistance instrument in a stowed state according to one embodiment.
FIG. 2 is a schematic structural diagram of the vehicle-mounted driver-assistance instrument in a stand state according to one embodiment.
FIG. 3 is a sectional view of FIG. 1.
FIG. 4 is another sectional view of FIG. 1.
FIG. 5 is a side view of an intelligent terminal device placed on the vehicle-mounted driver-assistance instrument.
FIG. 6 is a front view of the intelligent terminal device placed on the vehicle-mounted driver-assistance instrument.
FIG. 7 is a schematic structural diagram of an upper shell of a bracket member.
FIG. 8 is an exploded view of the vehicle-mounted driver-assistance instrument.

Reference numerals:
1, host body; 11, display screen; 12, upper housing; 121, accommodating space; 122, stop surface; 123, mounting surface; 13, lower housing; 14, first PCB; 141, first interface; 142, second interface; 15, second PCB; 151, data storage card slot; 16, first support plate; 17, second support plate; 18, stationary side plate; 19, rubber pad; 2, bracket member; 21, magnetic member; 22, upper shell; 23, lower shell; 3, rotating member; 31, rotating arm; 32, central shaft; 33, stationary base.

### DESCRIPTION OF THE EMBODIMENTS

The technical solution of the invention is expounded in further detail below in conjunction with accompanying drawings and specific embodiments. Unless otherwise defined, all technical and scientific terms used here have the same meanings as commonly understood by those skilled in the art. The terms used in the description of the invention are merely for the purpose of describing specific embodiments and are not intended to limit the invention. The expression "some embodiments" involved in the following description indicates subsets of all possible embodiments. It should be understood that "some embodiments" may identical or different subsets of all possible embodiments and may be combined without conflicts.

It should be noted that when one element is referred to as being "fixed to" the other element, it may be fixed to the other element directly or by means of an intermediate element. When one element is referred as being "connected to" the other element, it may be connected to the other element directly or by means of an intermediate element. Terms "vertical", "horizontal", "inner", "outer", "left" and "right" and similar expressions are merely for the purpose of description and do not indicate unique implementations.

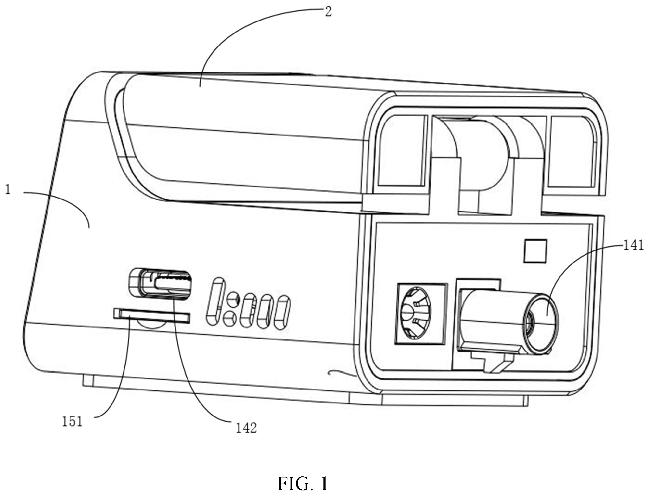

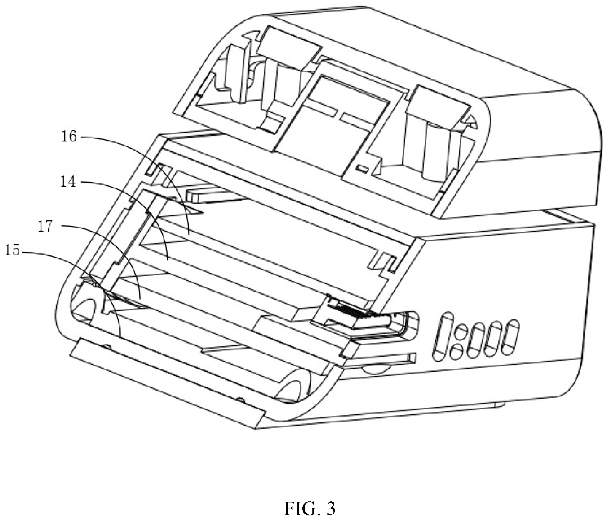

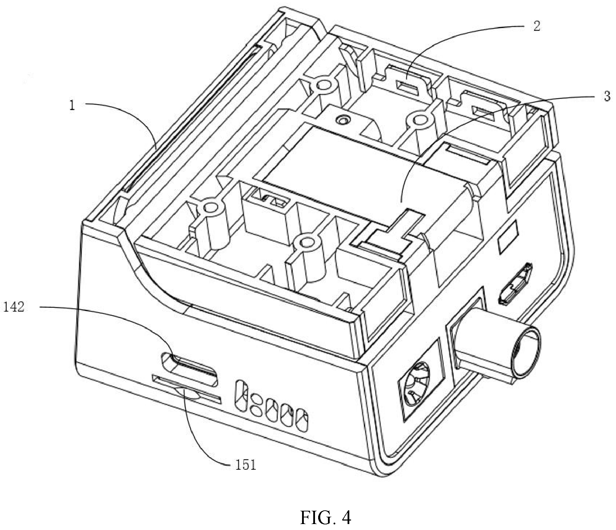

Referring to FIGS. 1-4, one embodiment of the present invention provides a vehicle-mounted driver-assistance instrument, including a host body 1 and a bracket member 2. The host body 1 includes a controller and a display screen 11, the controller is connected to an on-board camera, and the display screen 11 is arranged on one side of the host body 1. The controller controls the display screen 11 to display an in-vehicle image generated from image data acquired by the on-board camera. The bracket member 2 is rotatably connected to the host body 1 and rotates with respect to the host body 1 to a stand state or a stowed state. When the bracket member 2 rotates with respect to the host body 1 to the stand state, the bracket member 2 and the host body 1 form a mounting position for mounting an intelligent terminal device. When the bracket member 2 rotates with respect to the host body 1 to the stowed state, the bracket member 2 is stowed onto the host body 1. The intelligent terminal device can be stably and easily placed in the mounting position formed by the bracket member 2 and the host body 1 to provide various types of assistance in the in-vehicle driver-assistance process, and can also function as an additional display device of the host body 1. By establishing a communication between the host body 1 and the intelligent terminal device for data transmission between the host body 1 and the intelligent terminal device, the in-vehicle images can be displayed by the intelligent terminal device.

The bracket member 2 is rotatably connected to the host body 1 of the vehicle-mounted driver-assistance instrument, and the bracket member 2 is rotatable with respect to the host body 1 to the stand state or the stowed state, such that the host body 1 can provide a support function by the bracket member 2 to ensure that the intelligent terminal device is placed stably. In this way, the host body 1 not only provides a support function for stably placing the intelligent terminal device is placed stably, but also provides a storage function for the bracket member 2. but also provides a storage function for the bracket member 2. The structure is more compact, and it enables the intelligent terminal device to be installed in a more user-friendly viewing position when placed on bracket member 2, thereby enhancing the dual-screen viewing experience of in-vehicle images during driving.

In addition, the intelligent terminal device can be used as an additional display device of the host body 1 and can establish a communication with the host body 1 for data transmission, such that the host body 1 can display the in-vehicle images generated from image data acquired by the on-board camera on its local display screen 11, while simultaneously sending it in real time to the intelligent terminal device for display. In this way, benefiting from the development and popularization of various portable intelligent terminal devices, the display of the in-vehicle image no longer merely relies on the display function of the host body 1 of the vehicle-mounted driver-assistance instrument, double-screen display is provided based on data interaction between the host body 1 and the intelligent terminal device, and the vehicle-mounted driver-assistance instrument can display in real time a video data source adaptive to a scenario, for example, both infrared images and visible-light images can be applied to in-vehicle driver-assistance by double-screen display of the host body 1 and the intelligent terminal device to facilitate observation of drivers to ensure that the drivers watch clear in-vehicle images, thus improving driving safety and greatly improving the convenience and practicability of the host body.

Wherein, the vehicle-mounted driver-assistance instrument further includes a rotating member 3, and the bracket member 2 is rotatably connected to the host body 1 by the rotating member 3. The host body 1, the bracket member 2, and the rotating member 3 are integrated into an integrated structural unit that constitutes a host of the vehicle-mounted driver-assistance instrument. The host can be a portable integrated structure formed by the host body 1, the bracket member 2 and the rotating member 3, and can be detachable mounted in a compartment of a vehicle, facilitating driver-assistance function for double-screen display by adding the host into the vehicle. Optionally, the host can be integrated in the compartment of the vehicle in advance during vehicle design. The on-board camera is generally arranged outside the vehicle, and a wired or wireless communication is established between the host body 1 and the on-board camera. In this embodiment, the host body 1 can be in communication with the on-board camera by a FAKRA interface and a coaxial cable, and the on-board camera transmits the acquired image data to the host body 1 in the form of a video stream in real time.

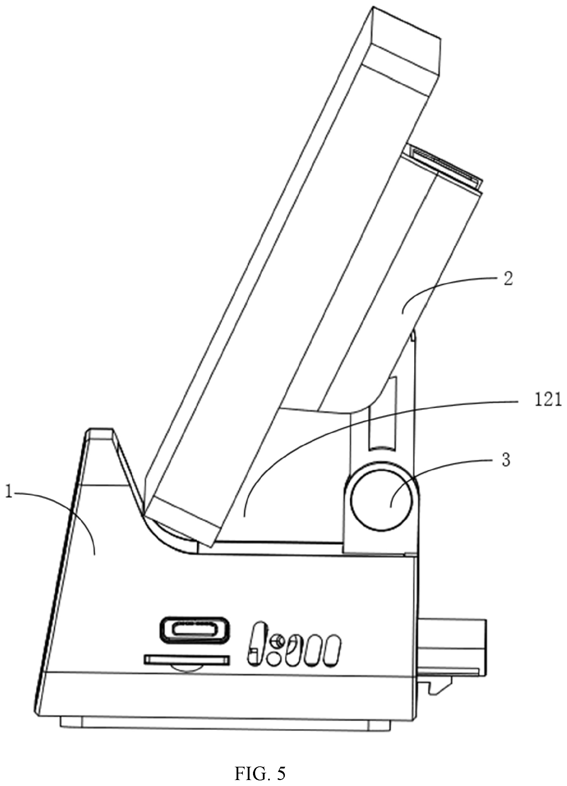

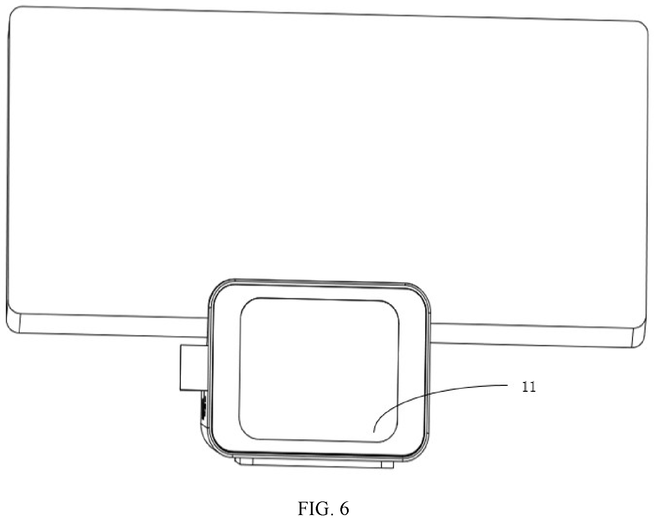

Referring to FIGS. 5 and 6, before a user prepares to drive the vehicle, an intelligent terminal carried by the user, such as a mobile phone, can be used as an extended display device for the vehicle-mounted driver-assistance instrument. The bracket member 2 is generally in the stowed state initially, and the user may manually rotate the bracket member 2 with respect to the host body 1 to switch to the stand state. When the intelligent terminal device is not needed, the user may rotate the bracket member 2 with respect to the host body 1 to switch to the stowed state. In this embodiment, the bracket member 2 is arranged on the host body 1 and is able to rotate with respect to the host body 1 to the stand state or the stowed state, such that the host body 1 and the bracket member 2 are integrated to form the driver-assistance instrument, which not only provide a driver-assistance function, but also provide a support function. During installation, it is only necessary to install the driver-assistance instrument inside the vehicle, and the installation process is simple and easy to implement. In addition, through the communication between the host body 1 and the intelligent terminal device, data transmission therebetween is enabled, allowing the intelligent terminal device to display the in-vehicle image.

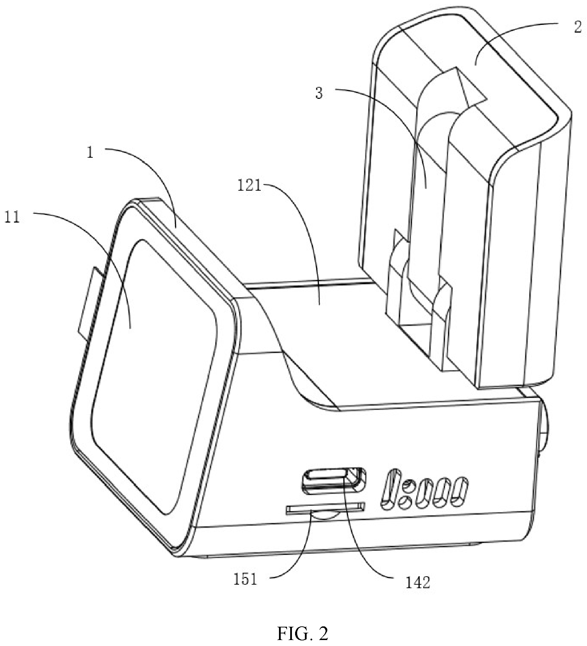

Referring to FIG. 2, in an optional embodiment, an accommodating space is 121 is defined on an upper surface of the host body 1. The bracket member 2 is rotatably connected to one side of the accommodating space, that is, the rotating member 3 is arranged on the side of the accommodating space 121. When the bracket member 2 rotates with respect to the host body 1 to the stand state, the bracket member 2 rotates in the accommodating space 121 in a direction away from the upper surface of the host body 1, and a space for receiving the intelligent terminal device is defined between the bracket member 2 and the upper surface of the host body 1. When the intelligent terminal device is placed in the space, one end of the intelligent terminal device abuts against an inner side of the bracket member 2, and the other end of the intelligent terminal device abuts against the upper surface of the host body 1. When the bracket member 2 rotates with respect to the host body 1 to the stowed state, the bracket member 2 is received in the accommodating space 121. The accommodating space 121 may be formed by being recessed from the upper surface of the host body 1, or may be directly formed on the uppers surface of the host body 1. In addition, a stop block may be arranged at a front end of the accommodating space 121, and/or an anti-slip pad or a limiting groove may be arranged on the upper surface of the host body 1 to prevent the intelligent terminal device form falling off in use. In this embodiment, the accommodating space 121 is formed by being recessed from the upper surface of the host body, and a concaved space for receiving the intelligent terminal device is formed between the bracket member and the upper surface of the host body 1 when the bracket member 2 is in the stand state, such that the intelligent terminal device is unlikely to fall off during vehicle movement. When the bracket member is in the stowed state, the bracket member 2 is received in the accommodating space 121 formed by being recessed from the upper surface of the host body 1, thus improving the overall aesthetics.

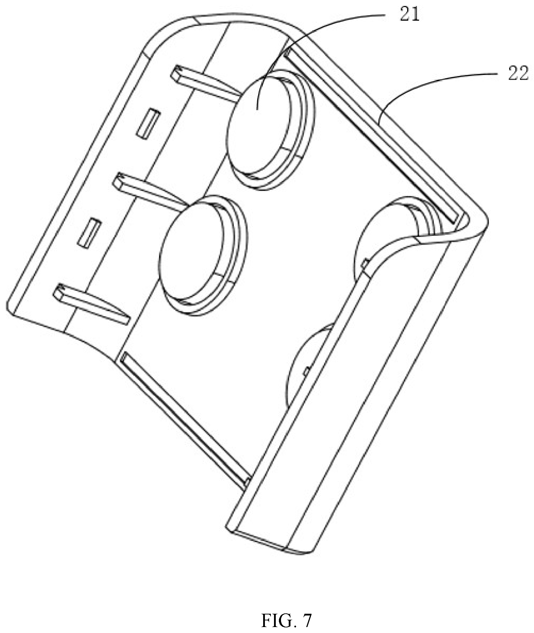

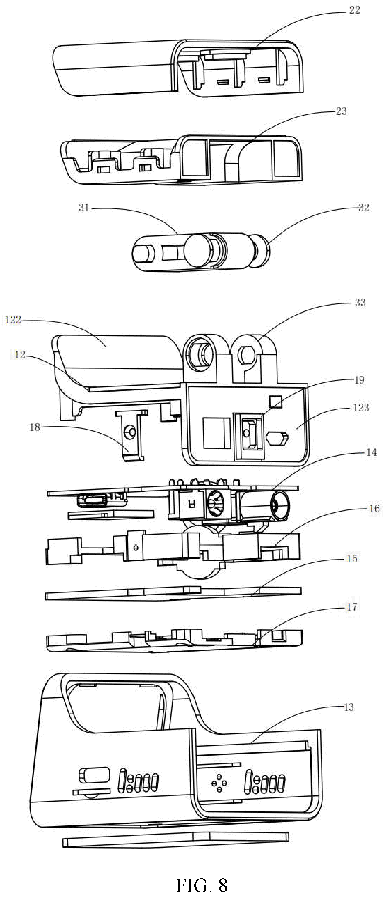

Referring to FIGS. 7 and 8, it should be further noted, the bracket member 2 is provided with a magnetic member 21 that generates a magnetic force for holding the intelligent terminal device on the bracket member 2. The bracket member 2 includes an upper shell 22 and a lower shell 23 matched with the upper shell 22. The magnetic member 21 may be arranged on an inner surface of the upper shell 22 to improve the overall aesthetics and compactness, or on an outer surface of the upper shell 22 to increase the magnetic attraction between the intelligent terminal device and the bracket member 2. The magnetic member 21 may be a magnet. For example, the magnetic member 21 includes four circular magnets distributed at four corners of the bracket member 2, and the multiple magnets are arranged on the inner surface of the upper shell 22 at intervals. The upper shell 22 and the lower shell 23 may be connected by snap fit or threaded connection. In this embodiment, the upper shell 22 and the lower shell 23 are made of ABS plastic, and surfaces of the upper shell 22 and the lower shell 23 are painted and brushed to enhance the aesthetics and wear resistance of the bracket member 2.

The rotating member 3 is connected to an outer surface of the lower shell 23 of the bracket member 2, the lower shell 23 is recessed toward the upper shell 22 at a position corresponding to the rotary member 3 to form a receiving space. When the bracket member 2 rotates with respect to the host body 1 to the stowed state, the rotating member 3 is accommodated in the receiving space. By the receiving space, it prevents interference between the rotating member 3 and the bracket member 2 during rotation and reduces the overall size of the bracket member 2 in the stowed state.

Referring to FIG. 8, in an optional embodiment, the host body 1 includes a lower housing 13 and an upper housing 12 which are arranged opposite to each other, and the lower housing 13 and the upper housing 12 are assembled together to form an internal space of the host body 1. One side adjacent to the display screen of a top surface of the upper housing 12 is bent upwards to form a stop surface 122, and the other side of the top surface of the upper housing 12 is bent downwards to form a mounting surface 123 provided with a plurality of interfaces. The stop surface 122 is configured to limit and block the intelligent terminal device placed in the mounting position. Optionally, the rotating member 3 is arranged at an edge of a side of the upper housing 12 near the mounting surface 123, and the bracket member 2 matches the top surface of the upper housing 12 in size and shape. The host body 1 and the bracket member are generally made of the same material. In this embodiment, the upper housing 12 and the lower housing 13 are both made of ABS plastic, and surfaces of the upper housing 12 and the lower housing 13 are subjected to painting and brushing finish.

In an optional embodiment, the rotating member 3 includes a rotating arm 31 fixed to the bracket member 2, a central shaft 32 fixed to the rotating arm 31, and a stationary base 33 used for mounting the central shaft 32. The stationary base 33 is arranged on a side of the upper surface of the host body 1 away from the display screen 11. The central shaft 32 is movably connected to the stationary base 33, and is rotatable with respect to the stationary base 33. The stationary base 33 includes two stationary frames arranged in parallel, and the central shaft 32 extends between the two stationary frames. Specifically, a first through-hole and a second through-hole are respectively defined at two ends of the rotating arm 31, the central shaft 32 penetrates through the first through-hole to connect the rotating arm 31 and the central shaft 32, a connecting piece connected to the lower shell 23 of the bracket member 2 penetrates through the second through-hole, and the connecting piece may be a bolt, which is easy to install and replace. In this embodiment, the stationary base 33 is arranged on the side of the upper surface of the host body 1 away from the display screen 11, such that when the bracket member 2 rotates with respect to the host body 1 to the stand state, both of the inner side of the bracket member 2 and an inner side of the display screen 11 face users. In this way, when the intelligent terminal device leans against the inner side of the bracket member 2, the intelligent terminal device and the display screen 11 are basically in the same direction, both facing users, thus facilitating observation of the users during vehicle driving.

Referring to FIG. 6, a first PCB 14 and a second PCB 15 are arranged in the host body 1. The first PCB 14 is provided with a first interface 141 connected to the external on-board camera and a second interface 142 in communication with the intelligent terminal device. The first interface 141 may be a FAKRA interface, and the second interface 142 may be a data transmission Type-C interface. Specifically, the external on-board camera is in communication with the controller via the FAKRA interface, and the intelligent terminal device is in communication with the controller via the data transmission Type-C interface. The second PCB 15 is provided with a data storage card slot 151 and a third interface connected to a GPS sensor. The third interface may be a mini-USB interface, a storage card is inserted into the data storage card slot 151 to record videos in real time to fulfil a driving record function or to implement a firmware upgrade, and the data storage card slot 151 may be a TF card slot, and the GPS sensor is in communication with the controller by the mini-USB interface to transmit data, acquired by the GPS sensor, to the controller.

In an optional embodiment, a first support plate 16 and a second support plate 17 are spaced apart in the host body 1, and the first PCB 14 and the second PCB 15 are respectively arranged on the first support plate 16 and the second support plate 17. A stationary side plate 18 is arranged between the first support plate 16 and the second support plate 17, and the stationary side plate 18 is fastened to the first support plate 16 and the second support plate 17. Specifically, the first PCB 14 is arranged above the first support plate 16, the first support plate 16 is arranged above the second support plate 17, and the second PCB 15 is arranged between the first support plate 16 and the second support plate 17. The first support plate 16, the second support plate 17 and the upper housing 12 are fastened by bolts. Further, the stationary side plate 18 is configured as a T-shaped structure, the bottom of the stationary side plate 18 is fastened to the second support plate 17 by snap fit, an upper portion of the stationary side plate 18 is fastened to the first support plate 16 by bolts, and an upper surface of the stationary side plate 18 abuts against the first PCB 14. Optionally, surfaces of the first support plate 16 and the second support plate 17 are subjected to mirror polishing to reduce the roughness of the surfaces in contact with the PCBs; and the surfaces of the first support plate 16 and the second support plate 17 are coated with insulating paint after mirror polishing to avoid short circuits of the PCBs.

In an optional embodiment, a rubber pad 19 is arranged at a joint between the FAKRA interface 141 and a housing of the host body 1. The rubber pad 19 facilitates the connection between the FAKRA interface 141 and the on-board camera, and fulfils a buffer and shock absorption effect. In a specific example, the rubber pad 19 is made of a 50HRC rubber material.

In an optional embodiment, the controller is in communication with an on-board dual-light camera provided with a dual-light core module, and the controller generates in-vehicle images of different types according to visible-light image data and infrared image data acquired by the on-board dual-light camera. The types of the in-vehicle images at least include: a type of infrared in-vehicle images and a type of visible-light in-vehicle images. The host body 1 displays the in-vehicle image of a first target type, the intelligent terminal device displays the in-vehicle image of a second target type, and the first target type and the second target different are identical or different. The on-board dual-light camera may be integrated by a visible-light camera and an infrared camera, and may synchronously acquire infrared signals and visible-light signals in the vehicle driving scenario. By photoelectric conversion and imaging processing, corresponding visible-light image data and infrared image data are obtained by the dual-light core module. By establishing a communication between the host body 1 of the vehicle-mounted driver-assistance instrument and the intelligent terminal device, double-screen display is provided based on data interaction between the host body 1 and the intelligent terminal, infrared in-vehicle images and visible-light in-vehicle images are respectively formed on the basis of the infrared image data and the visible-light image data acquired by the on-board dual-light camera, the infrared in-vehicle image is displayed by one of the display screen 11 of the host body 1 and the intelligent terminal, and the visible-light in-vehicle image is synchronously displayed by the other one of the display screen 11 of the host body 1 and the intelligent terminal. The first target type and the second target type may be set by default. For example, by default, the main body 1 is configured to display the first target type of in-vehicle images, namely infrared in-vehicle images, while the intelligent terminal device is configured to display the second target type of in-vehicle images, namely visible-light in-vehicle images. It should be noted that the size of the display screen 11 of the host body 1 is usually fixed. The vehicle-mounted driver-assistance instrument may provide double-screen display by establishing a communication between the host body 1 and the intelligent terminal device, thereby satisfying the requirement for displaying a larger-sized in-vehicle image by the intelligent terminal device. The first target type of the in-vehicle images displayed in the display screen 11 of the host body 1 and the second target type of the in-vehicle images displayed by the intelligent terminal device may be manually selected by users to synchronously display the same type of in-vehicle images.

In an optional embodiment, the on-board dual-light camera further includes an IMU sensor and a GPS sensor arranged on the dual-light core module, and the IMU sensor and the GPS sensor are configured to cooperatively acquire real-time speed/position information of the vehicle and send the information to the controller.

It should be further noted that a corrugated plate is mounted on the upper surface of the host body 1, the intelligent terminal device is placed upright in a corrugated groove recessed in the corrugated plate. The intelligent terminal device may be placed in different corrugated grooves according to actual circumstances to adjust placement angle of the intelligent terminal device, facilitating t drivers to view image information displayed on the intelligent terminal device. Optionally, a lower surface of the host body 1 is provided with a 3M adhesive layer for fixing the vehicle-mounted driver-assistance instrument inside the vehicle.

In an optional embodiment, the host body 1 is further equipped with an ambient-light sensor, and a window that allows light to pass through is provided on the housing of the host body 1 at a position corresponding to the ambient-light sensor. The ambient-light sensor senses a light intensity signal and sends the light intensity signal to the controller, and the controller controls the display screen 11 of the host body 1 to correspondingly display a white-light in-vehicle image or an infrared in-vehicle image according to the light intensity signal. The host body may acquire in real time light intensity information of the current environment by means of the ambient-light sensor, determine whether the current light is sufficient or insufficient, and adaptively control the type of the in-vehicle image in the host body 1 and the type of the in-vehicle image on the intelligent terminal to be switched.

The above embodiments are merely specific ones of the invention, and the protection scope of the invention is not limited to the above embodiments. Any modifications or substitutions easily obtained by any skilled in the art within the technical scope disclosed by the invention should fall within the protection scope of the invention. The protection scope of the invention should be defined by the claims.

## Claims

1. A vehicle-mounted driver-assistance instrument, comprising a host body (1) and a bracket member (2);
wherein the host body (1) comprises a controller connected to an on-board camera, and a display screen **(11),** the display screen **(11)** is arranged on a side of the host body (1), and the controller controls the display screen **(11)** to display an in-vehicle image generated from image data acquired by the on-board camera;
the bracket member (2) is rotatably connected to the host body (1) and rotates with respect to the host body (1) between a stand state or a stowed state;
when the bracket member (2) rotates with respect to the host body (1) to the stand state, the bracket member (2) and the host body (1) jointly form a mounting position for placing an intelligent terminal device; when the bracket member (2) rotates with respect to the host body (1) to the stowed state, the bracket member (2) is folded and stowed on the host body (1).

2. The vehicle-mounted driver-assistance instrument according to claim **1,** wherein an upper surface of the host body (1) defines an accommodating space, and the bracket member (2) is rotatably connected to a side of the accommodating space (121);
when the bracket member (2) rotates with respect to the host body (1) to the stowed state, the bracket member (2) is folded and stowed in the accommodating space (121); when the bracket member (2) rotates with respect to the host body (1) to the stand state, a free end of the bracket member (2) is away from the accommodating space (121), and the mounting position for mounting the intelligent terminal device is formed between the bracket member (2) and the accommodating space (121).

3. The vehicle-mounted driver-assistance instrument according to claim 2, wherein a magnetic member (21) is arranged on the bracket member (2), and the magnetic member (21) provides a magnetic force for attracting the intelligent terminal device onto the bracket member (2).

4. The vehicle-mounted driver-assistance instrument according to claim 2, wherein the host body (1) comprises a lower housing (13) and an upper housing (12) which are arranged opposite to each other, and the lower housing (13) and the upper housing (12) are assembled together to form an internal space of the host body (1);
one side of a top surface of the upper housing (12) close to the display screen (11) is bent upwards to form a stop surface (122), the other side of the top surface of the upper housing (12) is bent downwards to form a mounting surface (123) provided with a plurality of interfaces, and the stop surface (122) is configured to limit and stop the intelligent terminal device placed in the mounting position.

5. The vehicle-mounted driver-assistance instrument according to claim 1, further comprising a rotating member (3), wherein the bracket member (2) is rotatably connected to the host body (1) by the rotating member (3);
the rotating member (3) comprises a rotating arm (31) fixed to the bracket member (2), a central shaft (32) fixed to the rotating arm (31) and a stationary base (33) used for arranging the central shaft (32);
the stationary base (33) is arranged on an upper surface of the host body (1), and the central shaft (32) is movably connected to the stationary base (33) and is rotatable with respect to the stationary base (33).

6. The vehicle-mounted driver-assistance instrument according to claim 1, wherein a first PCB (14) and a second PCB (15) are arranged in the host body (1), and the first PCB (14) is provided with a first interface (141) connected to the external on-board camera and a second interface (142) in communication with the intelligent terminal device;
the second PCB (15) is provided with a data storage card slot (151) and a third interface connected to a GPS sensor.

7. The vehicle-mounted driver-assistance instrument according to claim 6, wherein a first support plate (16) and a second support plate (17) are spaced apart in the host body (1);
the first PCB (14) is arranged on the first support plate (16), and the second PCB (15) is arranged on the second support plate (17);
a stationary side plate (18) is arranged between the first support plate (16) and the second support plate (17), and the stationary side plate (18) is fastened to the first support plate (16) and the second support plate (17).

8. The vehicle-mounted driver-assistance instrument according to claim 1, wherein the host body (1) is in communication with the intelligent terminal device for data transmission with the intelligent terminal device, so that the in-vehicle image is displayed by the intelligent terminal device.

9. The vehicle-mounted driver-assistance instrument according to claim 8, wherein the controller is in communication with an on-board dual-light camera having a dual-light core module, the controller generates in-vehicle images of different types based on visible-light image data and infrared image data acquired by the on-board dual-light camera, and the types of the in-vehicle images at least comprise a type of infrared in-vehicle images and a type of visible-light in-vehicle images;
the display screen (11) of the host body (1) displays the in-vehicle image of a first target type, the intelligent terminal device displays the in-vehicle image of a second target type, and the first target type and the second target different are identical or different.

10. The vehicle-mounted driver-assistance instrument according to claim 9, wherein an ambient-light sensor is provided in the host body (1), the ambient-light sensor detects light intensity signals and transmits the light intensity signals to the controller; and according to the light intensity signals, the controller (11) controls the host body (1) to switch the first target type of the in-vehicle image displayed on the display screen (11), and/or controls to switch the second target type of the in-vehicle image displayed on the intelligent terminal device.
